# EUROPEAN PATENT APPLICATION

(11) **EP 3 029 982 A1**
(43) Date of publication of application: **08.06.2016**
(21) Application number: 14831231.7
(22) Date of filing: 18.07.2014
(51) Int. Cl.: H04W 28/08, H04W 16/32, H04W 52/02, H04W 92/10, H04W 92/20

(54) **BASE STATION, USER TERMINAL, AND WIRELESS COMMUNICATION CONTROL METHOD**

(30) Priority: 02.08.2013 JP 2013161688
(71) Applicant: NTT DOCOMO, INC., Chiyoda-ku Tokyo 100-6150 (JP)
(72) Inventor: TAKEDA, Kazuaki, Tokyo 100-6150 (JP); HARADA, Hiroki, Tokyo 100-6150 (JP); KISHIYAMA, Yoshihisa, Tokyo 100-6150 (JP); NAGATA, Satoshi, Tokyo 100-6150 (JP); ISHII, Hiroyuki, Palo Alto, California 94304 (US)
(74) Representative: Hoffmann Eitle
(86) International application number: PCT/JP2014/069147
(87) International publication number: WO 2015/016081

(57) **Abstract**

The present invention is designed to adequately control small cells (small base stations) on/off in a structure where small cells and macro cells are arranged to overlap each other. A base station forms a macro cell, which is arranged to overlap a small cell, controls on/off of a small base station forming the small cell, and has a reporting section that reports, to the small base station, information related to a UL signal transmitted from a user terminal, and a control section that controls transmission of a DL signal from the small base station based on information that is reported from the small base station having detected the UL signal.

## Description

### Technical Field

The present invention relates to a base station, a user terminal and a radio communication control method in a next-generation mobile communication system.

### Background Art

In a UMTS (Universal Mobile Telecommunications System) network, the specifications of long-term evolution (LTE) have been drafted for the purposes of further increasing high-speed data rates, providing low delay and so on (non-patent literature 1). In LTE, as multiple access schemes, a scheme that is based on OFDMA (Orthogonal Frequency Division Multiple Access) is used in downlink channels (downlink), and a scheme that is based on SC-FDMA (Single-Carrier Frequency Division Multiple Access) is used in uplink channels (uplink).

Also, successor systems of LTE (referred to as, for example, "LTE-advanced" or "LTE enhancement" (hereinafter referred to as "LTE-A")) have been under study for the purpose of achieving further broadbandization and increased speed beyond LTE. In the LTE-A system, a HetNet (Heterogeneous Network), in which small cells (for example, pico cells, femto cells and so on) having a local coverage area of a radius of approximately several tens of meters are formed inside a macro cell having a wide coverage area of a radius of approximately several kilometers, is under study (see, for example, non-patent literature 2). Also, in relationship to the HetNet, a study is in progress to use carriers of different frequency bands between the macro cell (macro base station) and the small cells (small base stations), in addition to the same frequency band.

### Citation List

### Non-Patent Literature

Non-Patent Literature 1: 3GPP TS 36.300 "Evolved UTRA and Evolved UTRAN Overall Description"
Non-Patent Literature 2: 3GPP TR 36.814 "E-UTRA Further Advancements for E-UTRA Physical Layer Aspects"

### Summary of Invention

### Technical Problem

In the above HetNet, many small cells may be placed in the macro cell. In this case, it may be possible to arrange small cells in a localized manner in places where the traffic is heavy, so as to achieve an off-loading effect between the cells. That is to say, when there is a user terminal that can connect with a plurality of small cells, it may be possible to change the small cell with which the user terminal connects, depending on each small cell's traffic condition and so on.

Meanwhile, from the perspective of saving power over the system and reducing the interference against neighboring cells, it is preferable to make small cells (small base stations) with a light traffic load among a plurality of small cells stop transmitting signals(assume the off state). When small cells (small base stations) are switched on/off for control in this way, what procedure should be employed raises a problem. For example, what operational procedures should be followed to make small cells in the off state transition to the on state poses a problem.

The present invention has been made in view of the above, and it is therefore an object of the present invention to provide a base station, a user terminal and a radio communication control method, whereby, in a structure in which small cells and macro cells are arranged to overlap each other, the small cells (small base stations) can be adequately controlled on/off.

### Solution to Problem

A base station, according to the present invention, provides a base station that forms a macro cell, which is arranged to overlap a small cell, and that controls on/off of a small base station forming the small cell, and this base station has a reporting section that reports, to the small base station, information related to a UL signal transmitted from a user terminal, and a control section that controls transmission of a DL signal from the small base station based on information that is reported from the small base station having detected the UL signal.

### Advantageous Effects of Invention

According to the present invention, it is possible to adequately control small cells (small base stations) on/off in a structure in which small cells and macro cells are arranged to overlap each other.

### Brief Description of Drawings

FIG. 1 is a conceptual diagram of a HetNet;
FIG. 2 is a diagram to show an example case where part of a plurality of small cells is placed in an off state;
FIG. 3 is a diagram to explain an example of operational procedures of small cell on/off control;
FIG. 4 provides diagrams to explain the frequencies of UL signals transmitted from user terminals;
FIG. 5 is a diagram to explain an example of operational procedures of small cell on/off control according to a first example;
FIG. 6 is a diagram to explain another example of operational procedures of small cell on/off control according to the first example;
FIG. 7 is a diagram to explain an example of operational procedures of small cell on/off control according to a second example;
FIG. 8 is a diagram to explain another example of operational procedures of small cell on/off control according to the second example;
FIG. 9 is a schematic diagram of a radio communication system according to the present embodiment;
FIG. 10 is a diagram to explain an overall structure of a radio base station according to the present embodiment;
FIG. 11 is a diagram to explain a functional structure of a macro base station according to the present embodiment;
FIG. 12 is a diagram to explain a functional structure of a small base station according to the present embodiment;
FIG. 13 is a diagram to explain an overall structure of a user terminal according to the present embodiment; and
FIG. 14 is a diagram to explain a functional structure of a user terminal according to the present embodiment.

### Description of Embodiments

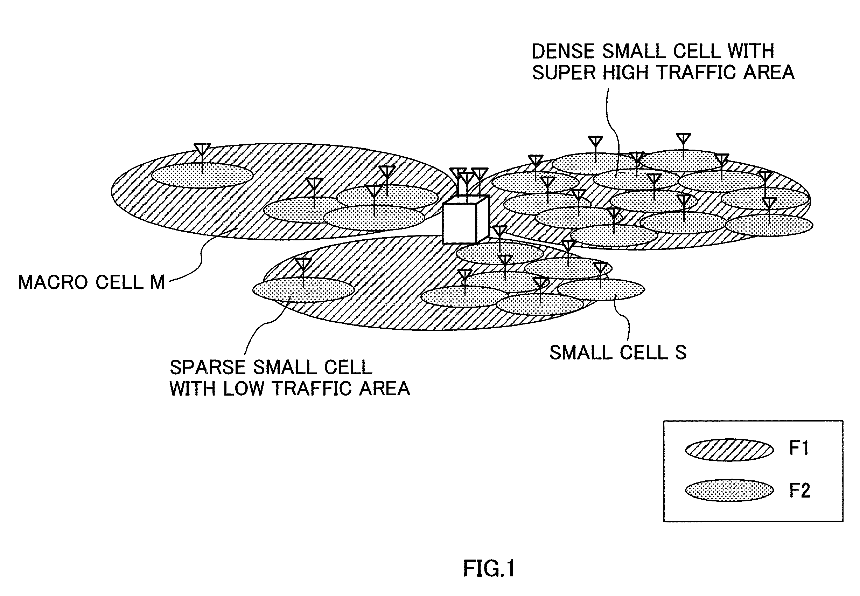

FIG. 1 is a conceptual diagram of the HetNet that is assumed in Rel. 12 and later versions. As shown in FIG. 1, a HetNet refers to a radio communication system in which macro cells and small cells are arranged to overlap each other geographically at least in part. A HetNet is comprised of a radio base station that forms a macro cell (hereinafter referred to as a "macro base station"), radio base stations that form small cells (hereinafter referred to as "small base stations"), and a user terminal that communicates with the macro base station and the small base stations.

As shown in FIG. 1, in macro cells M, a carrier F1 (hereinafter referred to as the "low frequency band carrier") of a relatively low frequency band -- for example, 800 MHz or 2 GHz -- is used. On the other hand, in a plurality of small cells S, a carrier F2 (hereinafter referred to as the "high frequency band carrier") of a relatively high frequency band -- for example, 3.5 GHz -- is used. Note that 800 MHz, 2 GHz and 3.5 GHz are only examples. 3.5 GHz may be used for the carrier for the macro cells M, and 800 MHz, 2 GHz 1.7 GHz and others may be used for the carrier for the small cells S.

In this way, a scenario (separate frequencies) to employ different frequencies between a small cell S and a macro cell M is under study for a radio communication system for LTE-A (Rel. 12 and later versions). In this case, it may be possible to use the macro cell M and the small cell S, which use different frequencies, simultaneously, by means of CA (carrier aggregation).

Now, generally speaking, the distribution of users and traffic are not fixed, but change over time or between locations. Consequently, when many small cells are placed in a macro cell, the small cells may be arranged in such a manner that their density and environment vary (sparse and dense) between locations, as shown in above FIG. 1.

For example, it may be possible to raise the density of placing small cells (dense small cells) in train stations, shopping malls and so on where many user terminals gather, and lower the density of placing small cells (sparse small cells) in places where user terminals do not gather. As shown in FIG. 1, by placing small cells densely and in a localized manner (that is, in clusters) in places where the traffic is heavy, it is possible to achieve an off-loading effect between the cells.

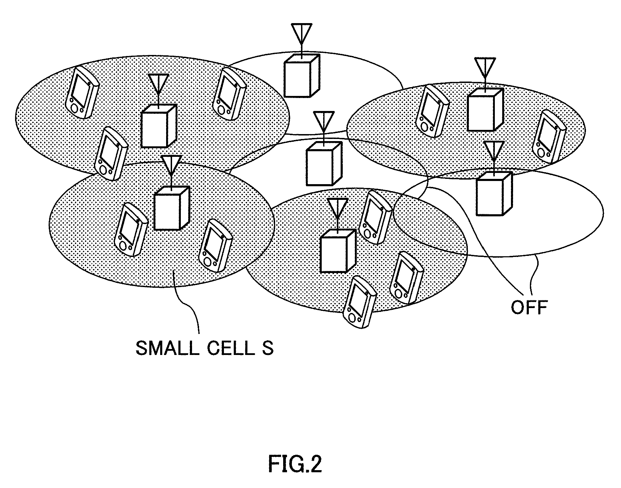

Also, a study is in progress to switch on/off and control small cells (small base stations) depending on the traffic load of each small cell (small cell on/off).For example, as shown in FIG. 2, it may be possible to place a small cell where the load of traffic is light in the off state.

In this case, the small base station, having transitioned to the off state, does not transmit DL signals (for example, the cell-specific reference signal (CRS)) and so on, so that it is possible to reduce the interference against neighboring small cells. Also, sine a small base station with a light traffic load is placed in the off state, it is possible to achieve reduced power consumption (energy saving).

Regarding the on/off control of small cells, it may be possible to employ time period-based control. For example, small cells may be turned off in a time period in which the traffic is low (for example, night time). However, in order to maximize the energy saving and the effect of reducing interference, it is preferable to control small cells on/off dynamically. For example, by controlling small cells (small base stations) on/off in subframe units, it is possible to reduce interference and achieve reduced power consumption (energy saving) more effectively.

However, when controlling small cells (small base stations) on/off dynamically, how and in what procedures/operation the small cells should be decided on/off raises a problem. In particular, since DL signals and so on are not transmitted during the off-state, how to execute control when making off-state small cells transition to the on state is the problem.

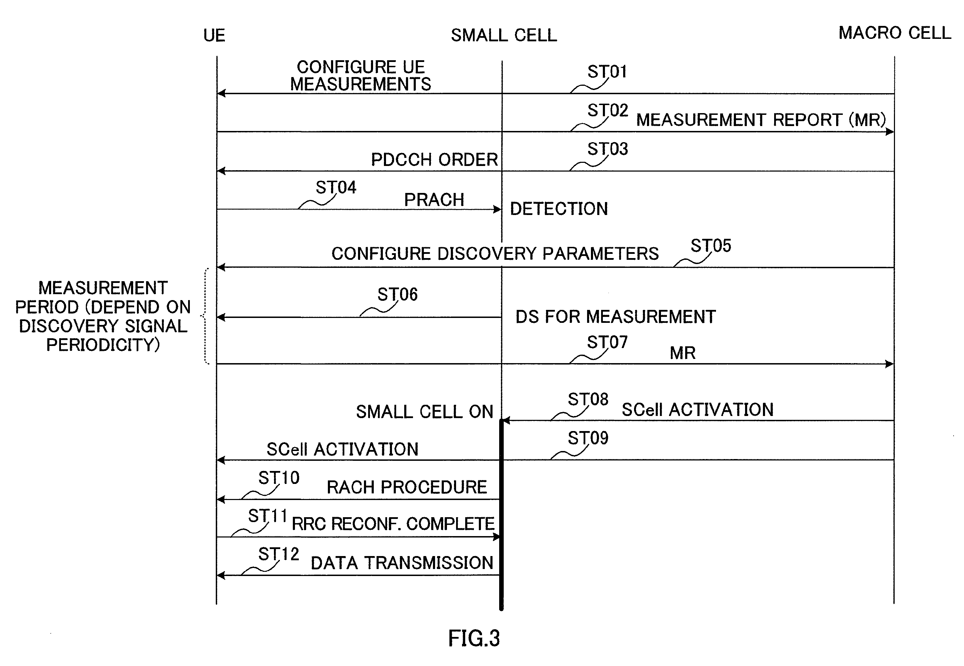

So, assuming a structure in which small cells and macro cells are arranged to overlap each other, the present inventors have focused on a method to control small cells on/off by making small cells in the off state transition to the discontinuous transmission (DTX) state by using uplink signals (UL signals) transmitted from user terminals. Now, a method will be described below, with reference to FIG. 3, in which off-state small cells transition to the DTX state and transmit detection signals (discovery signals) in response to UL signals transmitted from user terminals, and the small cells are controlled on/off based on the receiving condition of the detection signals in the user terminals and so on.

Note that, in the following description, when a small base station (small cell) is in the off state, this refers to the state in which the small cell can receive UL signals from user terminals but does not transmit DL signals. Also, when a small base station is in the discontinuous transmission (DTX) state, this refers to the state in which the small cell transmits the DL signal for measurement use (small cell detection) in a long cycle. Also, when a small base station is in the on state, this refers to the state in which the small cell communicates in the same way as existing base stations (legacy carriers). That is, although a small base station in the on-state can transmit DL signals, including downlink reference signals such as cell-specific reference signals (CRSs), data signals, control signals and so on, on a per subframe basis, a small base station in the DTX state does not transmit DL signals on a per subframe basis.

First, a macro cell (macro base station (Macro eNodeB)) commands a given user terminal to measure the quality of a small cell (quality measurement) (step 01). The user terminal, receiving the quality measurement command from the macro base station, measures the receiving condition with respect to an on-state small base station, and transmits the measurement result to the macro base station in the form of a measurement report (MR) (step 02).

The macro base station decides whether or not to switch an off-state small cell to the on state based on the MR that is received, the load of traffic in the on-state small cell, and so on. For example, when the MR (for example, receiving conditions such as received power (RSRP), received quality (RSRQ), etc.) for the small cell that is already in the on state is poor, the macro base station considers placing the off-state small cells in the on state. Also, even if the MR is good, if the small cell that is already in the on state shows a high traffic load, the macro base station considers placing the off-state small cells in the on state.

When the macro base station decides to place the off-state small cell in the on state, the macro base station makes a user terminal transmit a UL signal (for example, the PRACH (Physical Random Access Channel) signal) (steps 03 and 04). The off-state small cell (small base station) listens to (monitors) this UL signal and tries detection. The off-state small base station, having received the UL signal from the user terminal, transitions to the discontinuous transmission (DTX) state, and transmits a DL signal for measurement use (small cell detection) only for a certain period (step 06). Note that, when the DL signal is transmitted from the small base station, the macro base station reports information related to this DL signal to the user terminal (step 05).

The user terminal measures the receiving conditions (RSRP, RSRQ, etc.) of the DL signals transmitted from the small base stations in on state and the DTX state, and reports the measurement result to the macro base station as a MR (step 07). The macro base station, based on this MR and so on, determines on/off of the small base station in the discontinuous transmission (DTX) state. When switching the small base station to the on state, the macro base station sends a report to that effect to the user terminal and to that small base station (steps 08 and 09), and the small base station and the user terminal carry out existing connecting operation (steps 10 and 11). Then, the user terminal and the small base station transmit and receive data with each other (step 12).

Note that, when the user terminal transmits a poor MR and the macro base station decides that the small cell is not in adequate condition for use, the macro base station places the small base station in the discontinuous transmission (DTX) state back in the off state.

In this way, it is possible to use an UL signal transmitted from the user terminal as a trigger and make the small base station in the off-state transition to the DTX state and transmit DL signals. Note that, in above FIG. 3, based on a downlink control signal (PDCCH/EPDCCH) reported from the macro base station, the user terminal transmits a UL signal (for example, the PRACH signal), and the small base station in the off-state listens to and detects this UL signal.

In above FIG. 3, when the same frequency is used between the macro cell and the small cell (the same-frequency scenario), the frequency of the UL signal that is triggered by using the downlink control signal transmitted from the macro base station becomes the same as the frequency used in the small cell. In this case, it is likely that the small base station in the off state can easily detect this UL signal.

On the other hand, when different frequencies are used between the macro cell and the small cell (different-frequency scenario), it becomes difficult to use a downlink control signal, transmitted from the macro base station, to make the user terminal transmit a UL signal in the frequency of the small cell.

In this way, according to the scenario to apply different frequencies between the macro cell and small cell, cases might occur where the small base station listens to and detects a signal of a different frequency as a UL signal which the user terminal transmits for small cell on/off control. Also, in above FIG. 3, the small base station has to detect UL signals constantly.

So, the present inventors have found out that, by reporting information related to UL signals transmitted from the user terminal, to small base stations in the off state, the off-state small cells can adequately receive the UL signals transmitted from the user terminal even when the macro cell and the small cells use different frequencies. Also, since the small base stations detect the UL signals efficiently based on the UL signal-related information, it becomes possible to carry out on/off control efficiently.

Also, referring to above FIG. 3, if all the small base stations that are in the off state transition to the DTX state and transmit DL signals in response to the detection of a UL signal transmitted from the user terminal, the user terminal has to receive DL signals from all of the small base stations having received the UL signal and carry out measurements. This might result in reduced throughput and increased power consumption of the user terminal.

So, the present inventors have found out reducing unnecessary DL signal detection operation in the user terminal, by using information which small base stations having detected UL signals transmitted from the user terminal transmit to the macro base station and controlling the transmission of DL signals from the small base stations based on this information.

Also, as shown in above FIG. 3, the present inventors have focused on using existing signals (for example, the PRACH signal, the aperiodic SRS, etc.) as UL signals to transmit from the user terminal. Meanwhile, if the PRACH signal is used as a UL signal, two cases -- namely, the case where the PRACH signal is used for its original function (existing random access procedures) and the case where the PRACH signal is used for a new function (small cell on/off control) -- may be possible.

In the existing random access procedure, a user terminal that has transmitted the PRACH increases the transmission power and transmits the PRACH signal a plurality of times if no response signal (random access response) to that PRACH is transmitted from the base station. Consequently, if the PRACH signal is applied to the on/off control of small cells on an as-is basis, wasteful random access procedure may be produced.

So, the present inventors have conceived of preventing producing wasteful procedure by reporting information (use for the original function, use for a new function, etc.) related to the types of UL signals (for example, the PRACH signal) from the macro base station to user terminals.

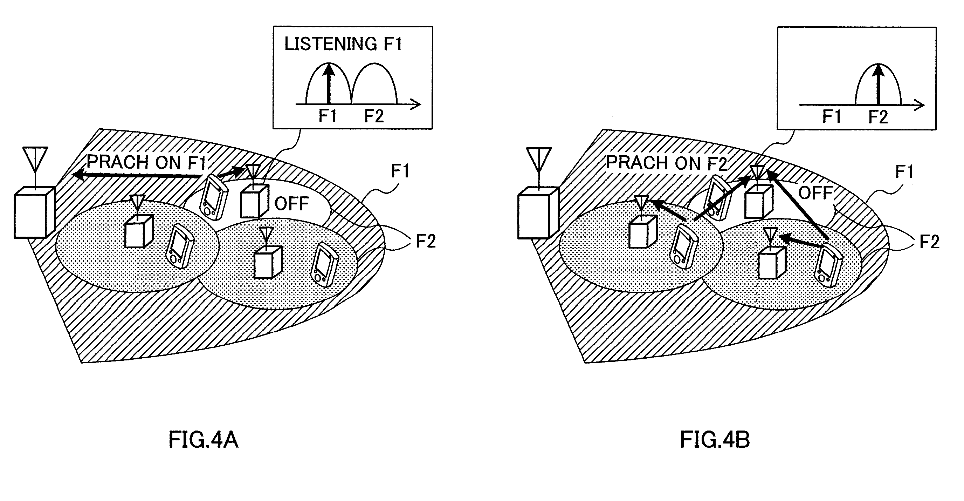

Now, the present embodiment will be described below in detail with reference to the accompanying drawings. Note that cases will be described with the present embodiment where, in the scenario to use different frequencies between macro cells and small cells, a user terminal that is connected with a small cell or a user terminal that is connected with a small cell is made to transmit UL signals, to allow a small cell in the off-state to listen to this uplink signal (FIGs. 4A and 4B).

### (First Example)

In the first example, a user terminal that is not connected with a small cell (small base station) is made to transmit a UL signal (for example, the RACH, the aperiodic SRS, etc.) and a small base station in the off state listens to this UL signal (FIG. 4A).

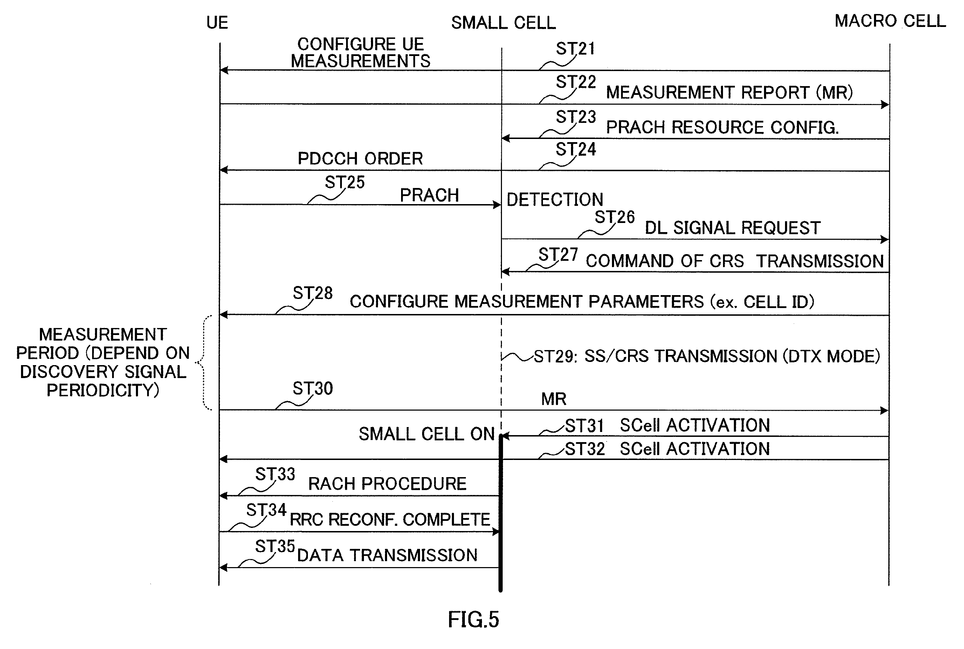

FIG. 5 shows a sequence diagram of small cell on/off control where synchronization signals (SSs) or cell-specific reference signals (CRSs) are used as small base station detection signals (DL signals). Also, although cases will be shown in the following description where the PRACH signal is use as a UL signal to transmit from user terminals, the present embodiment is by no means limited to this.

First, a macro cell (macro base station) commands small cell quality measurement to a user terminal (step 21). The user terminal may be a user terminal that is not connected with a small base station. The user terminal, receiving the quality measurement command from the macro base station, measures the receiving condition of a small base station in the on-state, and transmits the measurement result to the macro base station as a measurement report (MR) (step 22). In other words, a user terminal that is not connected with a small cell measures the receiving condition (RSRP, RSRQ, etc.) of a small cell in the on state and sends a report to a macro base station.

Based on the MR that is received and the load of traffic in the small cell in the on state, the macro base station decides to switch a small cell in the off-state to the on state. For example, when the MR (for example, the receiving condition such as the RSRP, the RSRQ, etc.) for the small in the on state is poor, the macro base station considers making the off-state small cell transition to the on state. Also, even when the MR is good, if the load of traffic in the small cell that is already in the on state is high, the macro base station considers making the off-state small cell transition to the on state.

When the macro base station decides to place the off-state small cell in the on state, the macro base station carries out the following operation so as to learn the receiving condition in the candidate user terminal with respect to the off-state small base station.

First, the macro base station, before making the user terminal transmit a UL signal (here, the PRACH signal), reports information related to the UL signal to the off-state small base station (step 23). Following this, the macro base station commands the user terminal to transmit a UL signal (step 24), and the user terminal, receiving the command, transmits a UL signal (step 25). The off-state small base station listens to and detects the UL signal transmitted from the user terminal.

In step 23, the macro base station reports information related to the PRACH signal (PRACH resource config.) to the small base station. By including information related to the PRACH signal in frequency information, even when the UL signal transmitted from the user terminal assumes the frequency used in the macro cell, the small base station can adequately receive the UL signal of a different frequency. Also, since the small base station can detect UL signals efficiently based on the UL signal-related information, it becomes possible to carry out on/off control efficiently. To be more specific, as long as information regarding the time the UL signal is transmitted from the user terminal is known, it is necessary to receive the UL signal only in this time of reception, so that it is possible to reduce the power consumption.

Note that it is equally possible to employ a structure in which a macro base station, by using a MAC signal, makes a user terminal transmit the UL signal in the frequency used in the small cell. For example, it is possible to make the macro base station transmit the UL signal in the frequency used in the small cell, by using cross carrier scheduling.

Also, in step 24, by using a downlink control signal (PDCCH signal), the macro base station can command the user terminal to transmit the UL signal (PRACH signal) (dedicated preamble). The user terminal transmits the UL signal in response to the command from the macro base station. Also, with the present embodiment, the UL signal, which is transmitted from the user terminal in step 25, functions as a signal to control the small cell (small base station) on/off.

Consequently, when the existing PRACH signal is used as the UL signal to be transmitted from the user terminal, the UL signal assumes a different function from the original function of the PRACH signal (existing random access procedures). So, when the PRACH signal is used to trigger small cell on/off control, operational procedures that are suitable for small cell on/off control are executed, instead of applying the existing random access procedures on an as-is basis.

To be more specific, by using a downlink control signal and/or the like, information related to the type of the PRACH signal (whether or not the random access procedures are applicable) is reported from the macro base station to the user terminal. For example, the macro base station can include information related to the type of the PRACH signal in the downlink control information in step 24 and report this to the user terminal.

By this means, even when the PRACH signal for use in small cell on/off control is received, the macro base station and the user terminal can carry out procedures that are separate from the existing random access procedures (RACH procedures). By this means, it is possible to prevent wasteful random access procedures. Note that the macro base station may report information related to the type of the PRACH signal to the small base station.

Note that, although a case has been described above with the present embodiment where the PRACH transmission command for the user terminal is sent by using the PDCCH signal (dedicated preamble), this is by no means limiting. For example, it is equally possible to employ a structure to transmit the PRACH from the user terminal randomly (random preamble). In this case, it is possible to easily learn the number of user terminals that are available for connection when the small cell transitions to the on state.

Following this, the small base station, having detected the UL signal (PRACH) transmitted from the user terminal, sends a report to that effect to the macro base station, and requests a DL signal transmission permission (DL signal request) (step 26). The DL signal is equivalent to a detection signal for allowing the user terminal to detect (discover) the small base station (here, a CRS or SS).

The macro base station, receiving the DL signal transmission permission request from the small base station, decides whether or not to transmit the DL signal, and reports the decision to the small base station (step 27). FIG. 5 shows a case where a DL signal transmission command is reported from the macro base station to the small base station.

For example, the macro base station decides whether or not each small base station should transmit the DL signal based on the number of UL signals (PRACH) detected in each small base station. To be more specific, small base stations where the number of PRACH signals that are detected is equal to or greater than a predetermined value are commanded to transmit the DL signal. In this way, by allowing the macro base station to control the small base stations to transmit DL signals, instead of transmitting DL signals from all the small base stations having received UL signals, it is possible to reduce unnecessary DL signal measurements in user terminals. By this means, it is possible to prevent a decrease in throughput and an increase in power consumption in user terminals.

Also, the macro base station may decide whether or not to make each small base station transmit DL signals depending on the type of the UL signals detected in each small base station. For example, the macro base station sends a DL signal transmission command to a small base station having received the PRACH signal for use in small cell on/off control, and does not send the DL signal transmission command to a small base station having received the PRACH signal for use in the existing random access procedures. By this means, it is possible to reduce unnecessary procedures.

Following this, the small base station having received the downlink signal transmission command from the macro base station transitions from the off state to the discontinuous transmission state (DTX mode) and transmits the DL signal (here, a CRS or SS) for a predetermined period (step 29). The time to transmit the DL signal can be configured as appropriate.

The macro base station having commanded the transmission of the DL signal to the small base station reports measurement parameters for detecting the small base station to the user terminal (step 28). If the DL signal is a cell-specific reference signal (CRS), the cell ID of the small base station to transmit this CRS and so on are transmitted to the user terminal.

The user terminal measures the receiving conditions (RSRP, RSRQ, etc.) of the DL signal (for example, the CRS) transmitted from the small base station in the DTX state, and reports the measurement result to the macro base station as a MR (step 30). The macro base station determines the on/off of the small cell based on the MR received.

If the macro base station decides to make the small cell transition to the on state, the macro base station sends a report to that effect (SCell activation) to the small base station and the user terminal (steps 31 and 32). The small base station transitions from the DTX state to the on state based on the report (Scell activation) from the macro base station. On the other hand, when the MR that is transmitted from the user terminal is poor and the macro base station decides that the small cell is not in adequate condition for use, the macro base station places the small base station in the discontinuous transmission (DTX) state back in the off state.

Following this, after the random access procedures are executed and connection is established between the user terminal and the small base station having transitioned to the on state (RRC reconf. complete) (steps 33 and 34), data is transmitted and received (step 35).

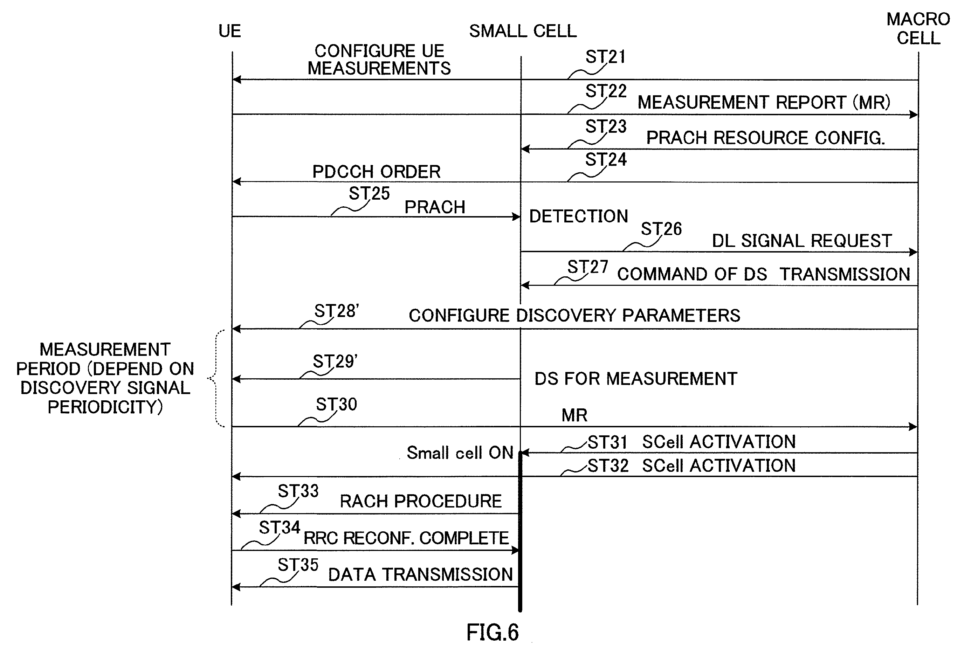

Next, FIG. 6 shows a case where a different detection signal (discovery signal) from the above-described CRS is used as a small cell detection DL signal. Other DL signals that can be used include reference signals besides the CRS (for example, terminal-specific reference signals (DM-RSs), channel information measurement reference signals (CSI-RSs), etc.), signals that are defined anew, and so on.

In FIG. 6, steps 21 to 27 and steps 30 to 35 are the same as in above FIG. 5. Referring to FIG. 6, the macro base station, having sent the DL signal transmission command to the small base station, reports DL signal parameters (discovery parameters) to the user terminal (step 28'). Then, the small base station transmits the detection signal (step 29'). Note that the DL signal parameters may be the signal structure and the transmission time of the DL signal (the transmission cycle, the transmission period, etc.) and so on.

### (Second Example)

A case will be described with a second example where a user terminal connected with a small cell (small base station) is made to transmit a UL signal (for example, the PRACH, the aperiodic SRS, etc.) and the small base station in the off state listens to the UL signal (FIG. 4B).

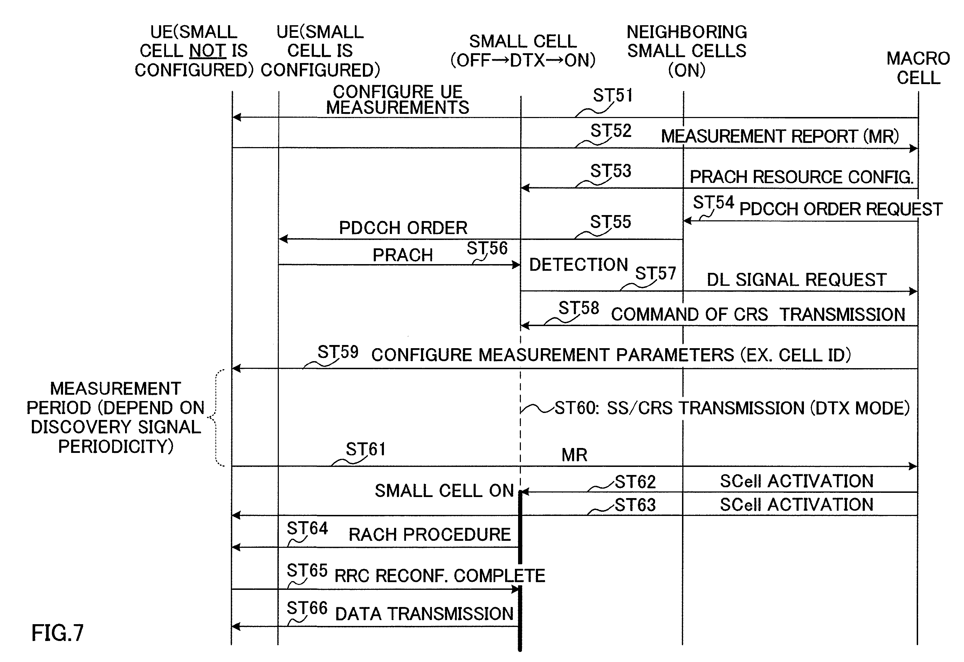

FIG. 7 is a sequence diagram of small cell on/off control where synchronization signals (SSs) or cell-specific reference signals (CRSs) are used as small base station detection signals (DL signals). Also, although a case will be shown in the following description where the PRACH signal is used as a UL signal to transmit from a user terminal, the present embodiment is by no means limited to this.

First, the macro cell (macro base station) commands a small cell quality measurement to a user terminal that is not connected with a small cell (step 51). The user terminal, receiving the quality measurement command from the macro base station, measures the receiving conditions of a small base station in the on-state, and transmits the measurement result to the macro base station as a measurement report (MR) (step 52).

Based on the MR that is received and the load of traffic in the small cell in the on state, the macro base station decides whether or not to switch an off-state small cell to the on state. When the macro base station decides to place an off-state small cell in the on state, the macro base station carries out the following operation in order to learn the receiving condition of the candidate user terminal with respect to the off-state small base station.

With the second example, the user terminal that is connected with the small cell in the on state is made to transmit a UL signal (here, the PRACH signal). First, the macro base station, before making the user terminal transmit the UL signal, reports information related to the UL signal to the off-state small base station (step 53). Following this, the macro base station commands the on-state small base station to make the user terminal serving under that small base station transmit a UL signal (the PRACH signal) (step 54).

The small base station, having received the command from the macro base station, commands the serving user terminal to transmit the UL signal (step 55), and the user terminal connected with the small base station transmits the UL signal (step 56). The off-state small base station listens to and detects the UL signals transmitted from user terminals connected with other small base stations.

In step 53, the macro base station reports information related to the PRACH signal (PRACH resource config.) to the small base station. The small base station detects the UL signal efficiently based on the information related to the UL signal, so that it becomes possible to carry out on/off control efficiently. Note that the UL signal that is transmitted from the user terminal in step 56 assumes the frequency used in the small cell.

Also, in step 55, by using a downlink control signal (PDCCH signal), the small base station in the on state can command the serving user terminal to transmit the UL signal (PRACH signal) (dedicated preamble). The user terminal transmits the UL signal in response to the command from the small base station. Also, with the present embodiment, the UL signal, which is transmitted from the user terminal in step 56, functions as a signal to control the small cell (small base station) on/off.

Consequently, when the existing PRACH signal is used as the UL signal to be transmitted from the user terminal, the UL signal assumes a different function from the original function of the PRACH signal (existing random access procedures). So, when the PRACH signal is used to trigger small cell on/off control, operational procedures that are suitable for small cell on/off control are executed, instead of applying the existing random access procedures on an as-is basis.

To be more specific, by using a downlink control signal and/or the like, information related to the type of the PRACH signal (whether or not the random access procedures are applicable) is reported from the small base station to the user terminal. For example, the small base station can include information related to the type of the PRACH signal in the downlink control information in step 55 and report this to the user terminal.

By this means, even when the PRACH signal for use in small cell on/off control is received, the small base station and the user terminal can carry out procedures that are separate from the existing random access procedures (RACH procedures). By this means, it is possible to prevent wasteful random access procedures. Note that the macro base station may report information related to the type of the PRACH signal to the user terminal.

Following this, the small base station in the off state, having detected the UL signal (PRACH) transmitted from the user terminal, sends a report to that effect to the macro base station, and requests a DL signal transmission permission (DL signal request) (step 57). The DL signal is equivalent to a detection signal for allowing the user terminal to detect (discover) the small base station (here, a CRS or SS).

The macro base station, receiving the DL signal transmission permission request from the small base station, decides whether or not to transmit the DL signal, and reports the decision to the small base station (step 58). FIG. 7 shows a case where a DL signal transmission command is reported from the macro base station to the small base station.

For example, the macro base station decides whether or not each small base station should transmit the DL signal based on the number of UL signals (PRACH) detected in each small base station. To be more specific, small base stations where the number of PRACH signals that are detected is equal to or greater than a predetermined value are commanded to transmit the DL signal. In this way, by allowing the macro base station to control the small base stations to transmit DL signals, instead of transmitting DL signals from all the small base stations having received UL signals, it is possible to reduce unnecessary DL signal measurements in user terminals. By this means, it is possible to prevent a decrease in throughput and an increase in power consumption in user terminals.

Also, the macro base station may decide whether or not to make each small base station transmit DL signals depending on the type of the UL signals detected in each small base station. For example, the macro base station sends a DL signal transmission command to a small base station having received the PRACH signal for use in small cell on/off control, and does not send the DL signal transmission command to a small base station having received the PRACH signal for use in the existing random access procedures. By this means, it is possible to reduce unnecessary procedures.

Following this, the small base station having received the downlink signal transmission command from the macro base station transitions from the off state to the discontinuous transmission state (DTX mode) and transmits the DL signal (here, a CRS or SS) for a predetermined period (step 60).

The macro base station having commanded the transmission of the DL signal to the small base station reports measurement parameters for detecting the small base station to the user terminal (step 59). If the DL signal is a cell-specific reference signal (CRS), the cell ID of the small base station to transmit this CRS and so on are transmitted to the user terminal.

The user terminal measures the receiving conditions (RSRP, RSRQ, etc.) of the DL signal (for example, the CRS) transmitted from the small base station in the DTX state, and reports the measurement result to the macro base station as a MR (step 61). The macro base station determines the on/off of the small cell based on the MR received. If the macro base station decides to make the small cell transition to the on state, the macro base station sends a report to that effect (SCell activation) to the small base station and the user terminal (steps 62 and 63). The small base station transitions from the DTX state to the on state based on the report (Scell activation) from the macro base station.

Following this, after the random access procedures are executed and connection is established between the user terminal and the small base station having transitioned to the on state (RRC reconf. complete) (steps 64 and 65), data is transmitted and received (step 66).

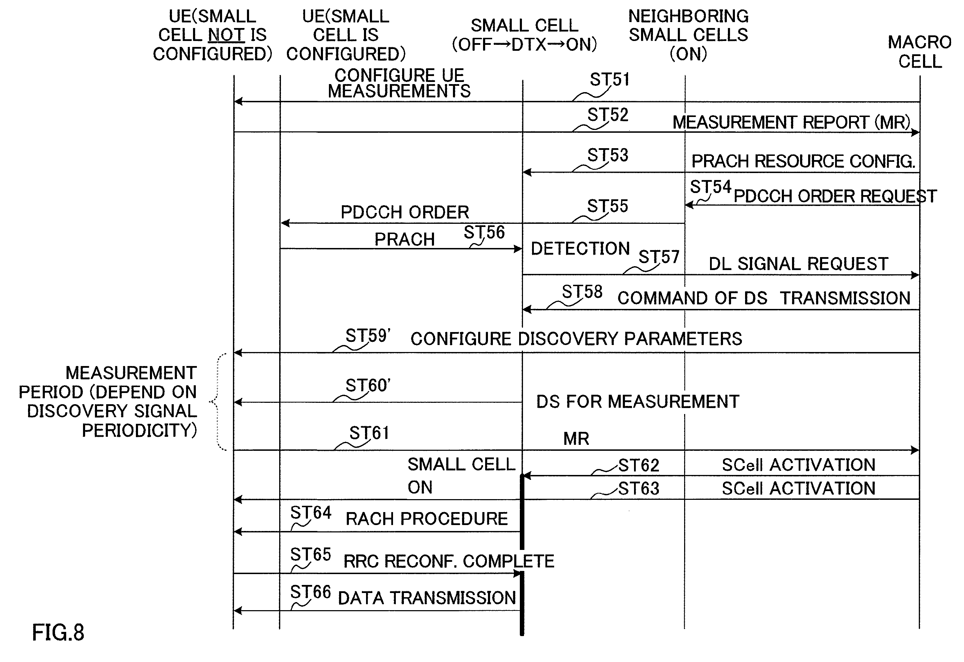

Next, FIG. 8 shows a case where a different detection signal (discovery signal) from the above-described CRS is used as a small cell detection DL signal. Other DL signals that can be used include reference signals besides the CRS (for example, terminal-specific reference signals (DM-RSs), channel information measurement reference signals (CSI-RSs), etc.), signals that are defined anew, and so on.

In FIG. 8, steps 51 to 58 and steps 61 to 66 are the same as in above FIG. 7. Referring to FIG. 8, the macro base station, having sent the DL signal transmission command to the small base station, reports DL signal parameters (discovery parameters) to the user terminal (step 59'). Then, the small base station transmits the detection signal (step 60'). Note that the DL signal parameters may be the signal structure and the transmission time of the DL signal (the transmission cycle, the transmission period, etc.) and so on.

### (Structure of Radio Communication System)

Now, a structure of a radio communication system according to the present embodiment will be described below. In this radio communication system, the above radio communication methods according to the first and second examples are employed. Note that the above radio communication methods according to the first and second examples may be applied individually or may be applied in combination.

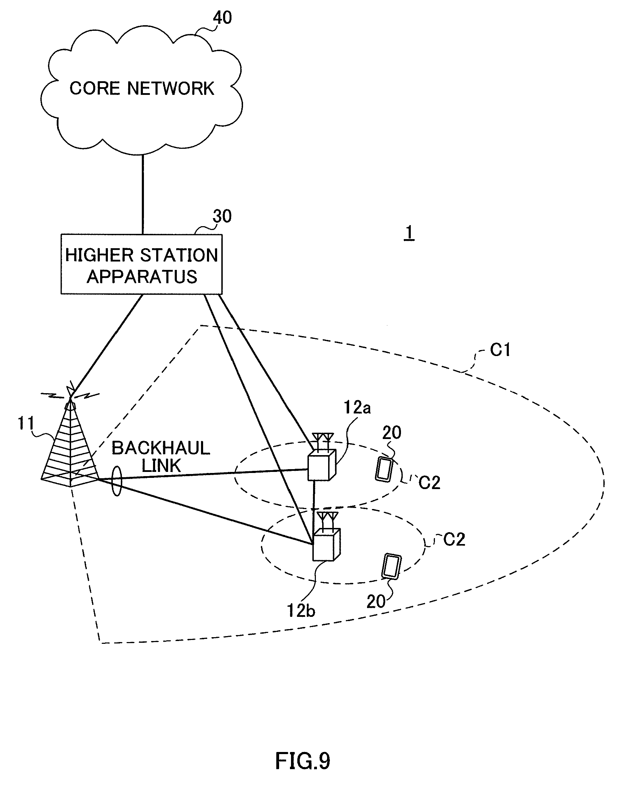

FIG. 9 is a schematic configuration diagram of a radio communication system according to the present embodiment. As shown in FIG. 9, the radio communication system 1 includes a macro base station 11, which forms a macro cell C1, and small base stations 12a and 12b, which are placed in the macro cell C1 and which form small cells C2 that are narrower than the macro cell C1. The user terminals 20 are configured to be capable of carrying out radio communication with at least one of the macro base station 11 and the small base stations 12a and 12b (hereinafter collectively referred to as "small base stations 12"). Note that the number of the macro base station 11 and the small base stations 12 is by no means limited to the number illustrated in FIG. 6.

In the macro cell C1 and the small cells C2, the same frequency band may be used, or different frequency bands may be used. Also, the macro base station 11 and each small base station 12 are connected with each other via an inter-base station interface (for example, optical fiber, X2 interface, etc.). The macro base station 11 and the small base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these.

Note that the macro base station 11 is a radio base station having a relatively wide coverage, and may be referred to as an "eNodeB (eNB)," a "radio base station," a "transmission point" and so on. The small base stations 12 are radio base stations having local coverages, and may be referred to as "RRHs (Remote Radio Heads)," "pico base stations," "femto base stations," "HeNBs (Home eNodeBs)," "transmission points," "eNodeBs (eNBs)," and so on. The user terminals 20 are terminals to support various communication schemes such as LTE, LTE-A and so on, and may include both mobile communication terminals and fixed communication terminals.

Also, in the radio communication system 1, as radio access schemes, OFDMA (Orthogonal Frequency Division Multiple Access) is applied to the downlink, and SC-FDMA (Single-Carrier Frequency Division Multiple Access) is applied to the uplink.

In the radio communication system 1, a downlink shared channel (PDSCH: Physical Downlink Shared Channel), which is used by each user terminal 20 on a shared basis, downlink control channels (PDCCH: Physical Downlink Control Channel, EPDCCH: Enhanced Physical Downlink Control Channel. etc.), a control format indicator channel (PCFICH: Physical Control Format Indicator Channel), a hybrid ARQ indicator channel (PHICH: Physical Hybrid-ARQ Indicator Channel), a broadcast channel (PBCH) and so on are used as downlink communication channels. User data and higher layer control information are transmitted by the PDSCH. Downlink control information (DCI) is transmitted by the PDCCH and the EPDCCH.

Also, in the radio communication system 1, an uplink shared channel (PUSCH: Physical Uplink Shared Channel), which is used by each user terminal 20 on a shared basis, an uplink control channel (PUCCH: Physical Uplink Control Channel) and so on are used as uplink communication channels. User data and higher layer control information are transmitted by the PUSCH. Also, downlink radio quality information (CQI: Channel Quality Indicator), delivery acknowledgment information (ACKs/NACKs) and so on are transmitted by the PUCCH.

Hereinafter, the macro base station 11 and the small base stations 12 will be collectively referred to as "radio base station 10," unless distinction needs to be drawn otherwise.

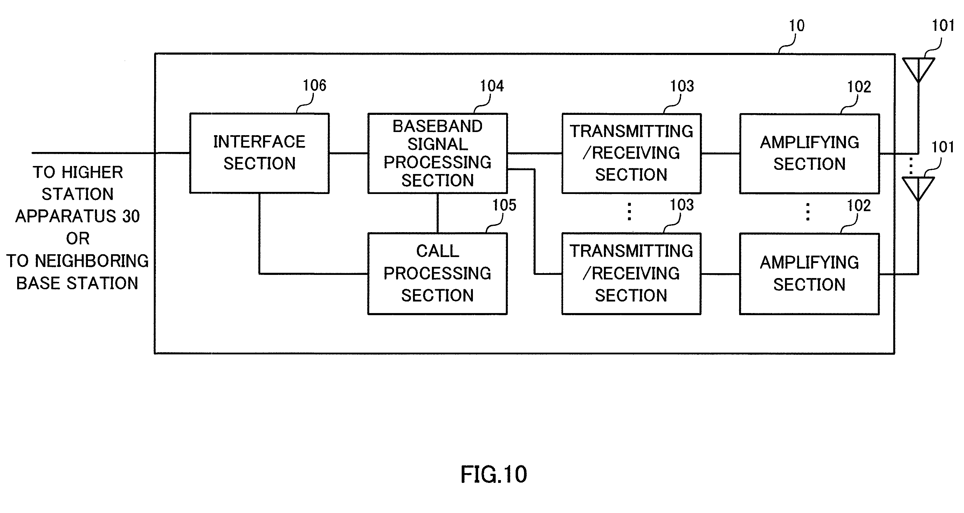

FIG. 10 is a diagram to show an overall structure of a radio base station 10 according to the present embodiment. The radio base station 10 has a plurality of transmitting/receiving antennas 101 for MIMO transmission, amplifying sections 102, transmitting/receiving sections 103, a baseband signal processing section 104, a call processing section 105 and an interface section 106.

User data to be transmitted from the radio base station 10 to a user terminal 20 through the downlink is input from the higher station apparatus 30, into the baseband signal processing section 104, via the interface section 106.

In the baseband signal processing section 104, a PDCP layer process, division and coupling of the user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a pre-coding process are performed, and the result is transferred to each transmitting/receiving section 103. Furthermore, downlink control signals are also subjected to transmission processes such as channel coding and an inverse fast Fourier transform, and are transferred to each transmitting/receiving section 103.

Each transmitting/receiving section 103 converts the downlink signals, which are pre-coded and output from the baseband signal processing section 104 on a per antenna basis, into a radio frequency band. The amplifying sections 102 amplify the radio frequency signals having been subjected to frequency conversion, and transmit the results through the transmitting/receiving antennas 101.

On the other hand, as for uplink signals, radio frequency signals that are received in the transmitting/receiving antennas 101 are each amplified in the amplifying sections 102, converted into baseband signals through frequency conversion in each transmitting/receiving section 103, and input in the baseband signal processing section 104.

In the baseband signal processing section 104, the user data that is included in the input uplink signals is subjected to an FFT process, an IDFT process, error correction decoding, a MAC retransmission control receiving process and RLC layer and PDCP layer receiving processes, and the result is transferred to the higher station apparatus 30 via the interface section 106. The call processing section 105 performs call processing such as setting up and releasing communication channels, manages the state of the radio base station 10 and manages the radio resources.

The interface section 106 transmits and receives signals to and from neighboring radio base stations (backhaul signaling) via an inter-base station interface (for example, optical fiber, X2 interface, etc.). For example, data is transmitted and received between the macro base station 11 and the small base stations 12 via the interface section 106. Alternatively, the interface section 106 transmits and receives signals to and from the higher station apparatus 30 via a predetermined interface.

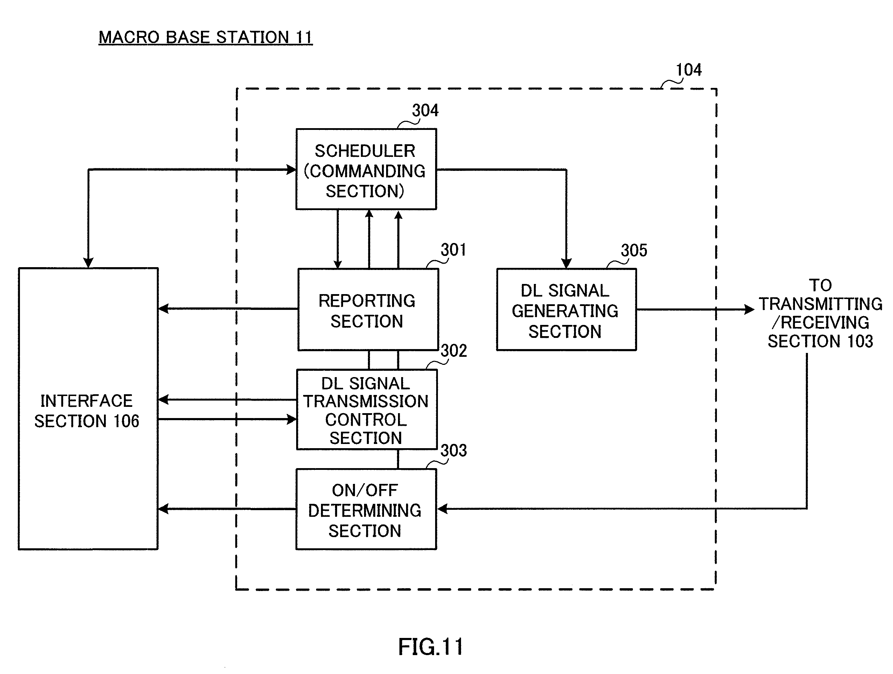

FIG. 11 is a diagram to show a functional structure of a macro base station 11 according to the present embodiment. Note that the following functional structure is formed with the baseband signal processing section 104 provided in the macro base station 11 and so on.

As shown in FIG. 11, the macro base station 11 has a reporting section 301, a DL signal transmission control section 302, an on/off determining section 303, a scheduler 304 and a DL signal generating section 305.

The reporting section 301 reports information related to a UL signal (for example, the PRACH signal) transmitted from the user terminal, to the small base station. For example, the reporting section 301 reports information related to the PRACH signal (PRACH resource config.) to transmit from the user terminal, to an off-state small base station 12. In this way, by reporting information related to the PRACH signal from the reporting section 301 to the small base station, even when the UL signal to be transmitted from the user terminal assumes the frequency that is used in the macro cell, it is possible to allow the small base station to receive the UL signal of a different frequency.

Based on information (DL signal request) that is reported from the off-state small base station that has detected the UL signal, the DL signal transmission control section 302 controls the transmission of DL signals from the small base station. For example, the DL signal transmission control section 302 decides whether or not to make each small base station transmit DL signals based on the number of UL signals (PRACH) detected in each small base station. That is, the DL signal transmission control section 302 can be configured to send a DL signal transmission command to small base stations where the number of PRACH signals detected is equal to or greater than a predetermined value.

The on/off determining section 303 determines on/off of small base stations based on the receiving condition in the user terminal with respect to the DL signals transmitted from the small base stations. For example, the on/off determining section 303 of the macro base station determines the on/off of small base station in the DTX state based on MR (receiving conditions with respect to the discovery signal) transmitted from the user terminal.

When deciding that the MR transmitted from the user terminal is good and that the small base station should transition to the on state anew, the on/off determining section 303 sends a report to that effect (SCell activation) to the user terminal and the small base station. On the other hand, when deciding that the MR that is transmitted from the user terminal is poor and that the small cell is not in adequate condition for use, the on/off determining section 303 places the small base station in the discontinuous transmission (DTX) state back in the off state.

The scheduler 304 allocates radio resources for the DL signals to transmit to the user terminal 20 (scheduling). For example, with the above first example, the scheduler 304 (commanding section), commands the DL signal generating section 305 to generate the DL signal for commanding the transmission of UL signals to user terminals that are not connected with a small base station in the on state. Also, with the above second example, the scheduler 304 (commanding section) commands the on-state small base station to make the user terminals transmit UL signals, by using the downlink control signal transmitted from the on-state small base station.

Also, the scheduler 304 controls the reporting of information related to the type of the UL signal (for example, the PRACH signal) (whether or not the random access procedures are applicable) to the user terminals. For example, the scheduler 304 commands the DL signal generating section 305 to include the information related to the type of the PRACH signal in the downlink control signal. Also, when the DL signal transmission control section 302 reports a DL signal transmission permission to the small base station, the scheduler 304 controls so that the information related to the DL signal transmitted from the small base station is reported to the user terminal.

The DL signal generating section 305 generates DL signals based on the command from the scheduler 304. For example, the DL signal generating section 305 generates control signals, data signals, reference signals and so on. The signals generated in the DL signal generating section 305 are transmitted to the user terminal 20 via the transmitting/receiving section 103.

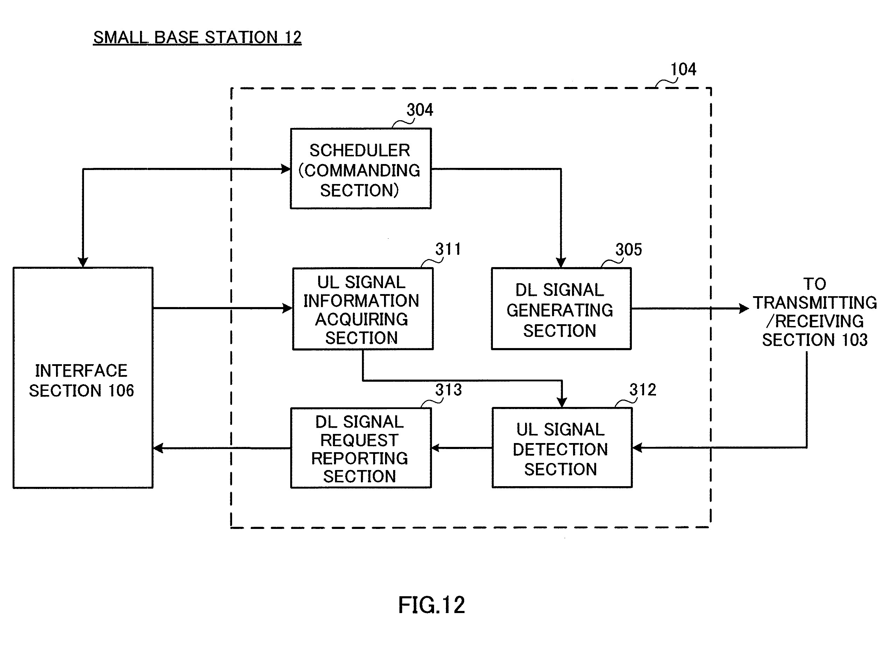

FIG. 12 is functional structure diagram of a small base station 12 according to the present embodiment. Note that the following functional structure is comprised of the baseband signal processing section 104 provided in the small base station 12 and so on.

As shown in FIG. 12, the small base station 12 has a UL signal information acquiring section 311, a UL signal detection section 312, a DL signal request reporting section 313, a scheduler 304 and a DL signal generating section 305.

The UL signal information acquiring section 311 acquires information related to the UL signal (for example, the PRACH signal) transmitted from the user terminal, from the macro base station 11. When the small base station 12 is in the off state, the UL signal information acquiring section 311 acquires information related to the PRACH signal (PRACH resource config.) that is transmitted from the user terminal, from the macro base station 11.

The UL signal detection section 312 listens to and detects the UL signals transmitted from the user terminal based on information related to UL signal acquired in the UL signal information acquiring section 311. Note that the UL signals may assume different frequencies (see above FIG. 4A) or may assume the same frequency (see above FIG. 4B).

Upon detecting the UL signal, the DL signal request reporting section 313 requests a DL signal (for example, the discovery signal) transmission permission to the macro base station 11. For example, the DL signal request reporting section 313 sends a report to the effect that the UL signal has been detected, to the macro base station 11. At this time, the DL signal request reporting section 313 may report information related to the number of PRACH signals detected, to the macro base station 11 as well.

The scheduler 304 allocates radio resource for DL signals to transmit to the user terminal 20 (scheduling). For example, when transmission of DL signals is commanded from the macro base station 11, the DL signal generating section 305 is commanded to generate the detection signal (discovery signal) for allowing the user terminal 20 to discover the small base station.

The DL signal generating section 305 generates the DL signal based on the command from the scheduler 304. For example, the DL signal generating section 305 generates control signals, data signals, reference signals and so on. Also, the DL signal generating section 305 generates the detection signal (discovery signal) for allowing the user terminal 20 to discover the small base station. The signals generated in the DL signal generating section 305 are transmitted to the user terminal 20 via the transmitting/receiving section 103.

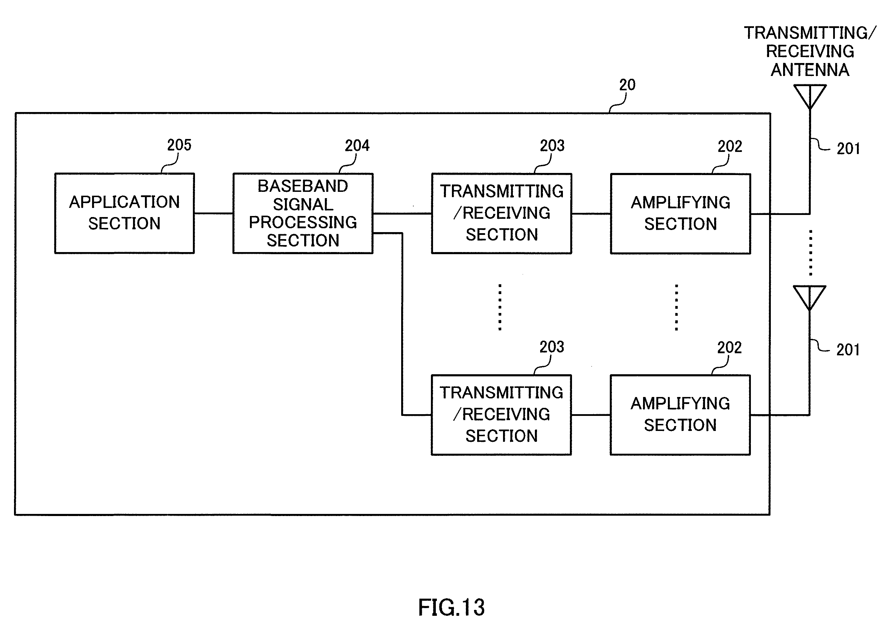

FIG. 13 is a diagram to show an overall structure of a user terminal 20 according to the present embodiment. The user terminal 20 has a plurality of transmitting/receiving antennas 201 for MIMO transmission, amplifying sections 202, transmitting/receiving sections (receiving sections) 203, a baseband signal processing section 204, and an application section 205.

As for downlink data, radio frequency signals that are received in a plurality of transmitting/receiving antennas 201 are each amplified in the amplifying sections 202, and subjected to frequency conversion and converted into baseband signals in the transmitting/receiving sections 203. These baseband signals are subjected to an FFT process, error correction decoding, a retransmission control receiving process and so on, in the baseband signal processing section 204. In this downlink data, downlink user data is transferred to the application section 205. The application section 205 performs processes related to higher layers above the physical layer and the MAC layer, and so on. Also, in the downlink data, broadcast information is also transferred to the application section 205.

Meanwhile, uplink user data is input from the application section 205 into the baseband signal processing section 204. The baseband signal processing section 204 performs a retransmission control (H-ARQ (Hybrid ARQ)) transmission process, channel coding, pre-coding, a DFT process, an IFFT process and so on, and transfers the result to each transmitting/receiving section 203. The baseband signals that are output from the baseband signal processing section 204 are converted into a radio frequency band in the transmitting/receiving sections 203. After that, the amplifying sections 202 amplify the radio frequency signals having been subjected to frequency conversion, and transmit the results from the transmitting/receiving antennas 201.

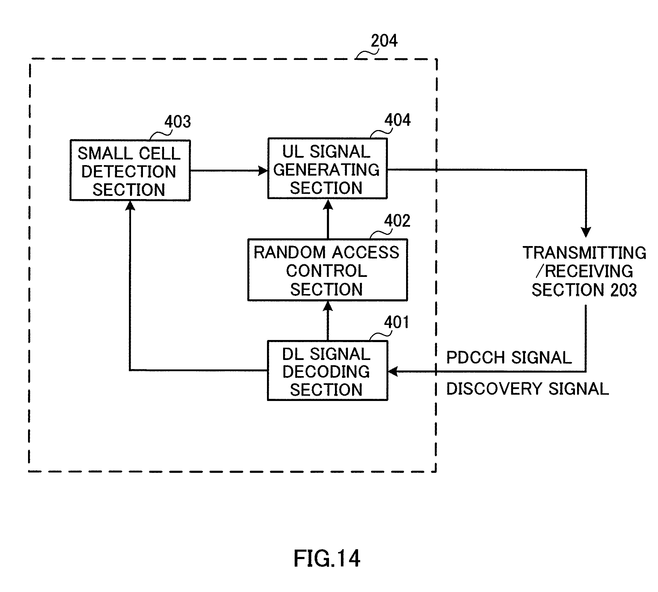

FIG. 14 is a principle functional structure diagram of the baseband signal processing section 204 provided in a user terminal 20. As shown in FIG. 14, the baseband signal processing section 204 provided in the user terminal 20 at least has DL signal decoding section 401 (acquiring section), a random access control section 402, a small cell detection section 403 and an UL signal generating section 404.

The DL signal decoding section 401 (acquiring section) decodes the DL signals transmitted from the macro base station 11 and the small base station 12. For example, downlink control information (PDCCH signal) transmitted from the macro base station 11 and the small base station 12, and the detection signal (discovery signal) transmitted from the small base station 12 are acquired. The DL signals acquired in the DL signal decoding section 401 are output to the random access control section 402 and the small cell detection section 403.

For example, information related to the type of the PRACH signal (as to whether or not the random access procedures are applicable) is included in a DL signal (for example, PDCCH signal), the DL signal decoding section 401 outputs this piece of information to the random access control section 402. Also, when measurement parameters or DL signal parameters (discovery parameters) are included in a DL signal (for example, higher layer signaling), the DL signal decoding section 401 outputs this piece of information to the small cell detection section 403.

The random access control section 402 controls the random access procedures. Also, the random access control section 402 transmits the PRACH signal based on a predetermined downlink control signal transmitted from the macro base station or the small base station. For example, based on information related to the type of the PRACH signal (as to whether or not the random access procedures are applicable) transmitted from the macro base station 11 or the small base station 12, the random access control section 402 can carry out procedures that are separate from the existing random access procedures (RACH procedures).

When using the PRACH signal to trigger small cell on/off control, the random access control section 402 carries out procedures that are suitable for small cell on/off control, instead of applying the existing random access procedures on an as-is basis. In this case, regardless of whether or there is a response to the PRACH signal transmitted from the user terminal 20, it is possible skip the operation to increase the transmission power and retransmit the PRACH signal.

The small cell detection section 403 detects the DL signal (discovery signal) transmitted from the small base station having detected the PRACH signal. When a discovery signal is detected, the receiving condition with respect to this discovery signal is measured.

The UL signal generating section 404 generates UL signals (PRACH signal, measurement report, etc.) based on commands from the random access control section 402 and the small cell detection section 403. Also, the UL signal generating section 404 generates uplink control signals such as delivery acknowledgement signals and so on, and uplink data signals.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of the claims. Consequently, the descriptions herein are provided only for the purpose of explaining examples, and should by no means be construed to limit the present invention in any way. For example, the examples described herein may be combined and implemented as appropriate.

The disclosure of Japanese Patent Application No. 2013-161688, filed on August 2, 2013, including the specification, drawings and abstract, is incorporated herein by reference in its entirety.

## Claims

1. A base station that forms a macro cell, which is arranged to overlap a small cell, and that controls on/off of a small base station forming the small cell, the base station comprising:
a reporting section that reports, to the small base station, information related to a UL signal transmitted from a user terminal; and
a control section that controls transmission of a DL signal from the small base station based on information that is reported from the small base station having detected the UL signal.

2. The base station according to claim 1, further comprising a determining section that determines on/off of the small base station based on a receiving condition of the user terminal with respect to the DL signal transmitted from the small base station.

3. The base station according to claim 1, further comprising a commanding section that, by using a downlink control signal, commands a user terminal that is not connected with a small base station in an on-state to transmit a UL signal,
wherein the downlink control signal includes information that represents a type of the UL signal.

4. The base station according to claim 1, further comprising a commanding section that commands a small base station in an on-state to make a user terminal that is connected with the small base station in the on-state transmit the UL signal, by using a downlink control signal transmitted from the small base station in the on-state,
wherein the downlink control signal includes information that represents a type of the UL signal.

5. The base station according to claim 3 or claim 4, wherein the UL signal is a PRACH signal and the type of the UL signal is information as to whether or not random access procedures are applicable.

6. The base station according to claim 1, wherein the information reported from the small base station having detected the UL signals is information related to the number of UL signals detected.

7. A base station that forms a small cell, which is arranged to overlap a macro cell, and that is controlled on/off by the macro base station forming the macro cell, the base station comprising:
an acquiring section that acquires, from the macro base station, information related to a UL signal transmitted from the user terminal;
a detection section that detects a UL signal transmitted from the user terminal based on the information related to the UL signal;
a reporting section that, when the UL signal is detected, requests a DL signal transmission permission to the macro base station; and
a transmission section that transmits a DL signal based on a command from the macro base station.

8. A user terminal that is configured to be capable of connecting with a macro base station that forms a macro cell and a small base station that forms a small cell, which is arranged to overlap the macro cell, the user terminal comprising:
a control section that controls random access procedure , and that transmits a PRACH signal based on a predetermined downlink control signal transmitted from the macro base station or the small base station; and
a detection section that detects a DL signal transmitted from a small base station having detected the PRACH signal,
wherein information as to whether or not random access procedures are applicable is included in the predetermined downlink control signal, and the control section decides whether or not the random access procedures are applicable based on the predetermined downlink control signal.

9. The user terminal according to claim 8, wherein the control section transmits the PRACH signal in a frequency employed in the macro base station upon receiving the predetermined downlink control signal from the macro base station, and transmits the PRACH signal in a frequency employed in the small base station upon receiving the predetermined downlink control signal from a small base station in an on-state.

10. A radio communication control method for controlling on/off of a small base station that forms a small cell, which is arranged to overlap a macro cell, the radio communication control method comprising the steps of:
reporting, to the small base station, information related to a UL signal transmitted from a user terminal; and
controlling transmission of a DL signal from the small base station based on information that is reported from the small base station having detected the UL signal.
